# EUROPEAN PATENT SPECIFICATION

(11) **EP 3 850 449 B1**
(45) Date of publication and mention of the grant of the patent: **10.04.2024**
(21) Application number: 19783380.9
(22) Date of filing: 10.09.2019
(51) Int. Cl.: G05B 19/418

(54) **AUTOMATIC DEVICE AND AUTOMATIC METHOD TO MOVE AND REARRANGE SHEETS OF GLASS AND PANES OF INSULATING GLASS**
AUTOMATISCHE VORRICHTUNG UND AUTOMATISCHES VERFAHREN ZUM BEWEGEN UND UMORDNEN VON GLAS UND SCHEIBEN AUS ISOLIERGLAS
DISPOSITIF AUTOMATIQUE ET PROCÉDÉ AUTOMATIQUE DE DÉPLACEMENT ET DE RÉAGENCEMENT DE FEUILLES DE VERRE ET DE CARREAUX DE VITRAGE ISOLANT

(30) Priority: 11.09.2018 IT 201800008478
(43) Date of publication of application: 21.07.2021
(73) Proprietor: Forel Spa, 31056 Roncade (TV) (IT)
(72) Inventor: VIANELLO, Fortunato, 31056 Roncade (Frazione Vallio) (IT); VIANELLO, Riccardo, 31056 Roncade (IT); MOSCHINI, Dino, 31056 Roncade (IT)
(74) Representative: Petraz, Gilberto Luigi
(86) International application number: PCT/IT2019/050199
(87) International publication number: WO 2020/053908

(56) References cited:
- WO-A1-2017/149347
- US-A1- 2013 153 694
- SEIDEL STEPHAN ET AL: "Enhancing the energy-efficient production of tempered glass by using simulation-based optimisation", 2017 22ND IEEE INTERNATIONAL CONFERENCE ON EMERGING TECHNOLOGIES AND FACTORY AUTOMATION (ETFA), IEEE, 12 September 2017 (2017-09-12), pages 1-4, XP033293084, DOI: 10.1109/ETFA.2017.8247750

## Description

### FIELD OF THE INVENTION

The field of the invention is that of the preamble to claim 1.

### BACKGROUND OF THE INVENTION AND INHERENT PROBLEMS

Nowadays it is known to rearrange both sheets of glass A and also panes of insulating glass B, both later called cumulatively "elements", upstream or downstream of the work processes and above all between the work processes, which can mainly but not limitedly and not necessarily be outlined as: cutting, grinding, tempering, manufacturing of insulating glass. These example processes are listed since they are sufficient to summarize the typical cases which the content of the present invention is concerned with, which comes within the flat glass working industry. The rearranging is carried out either by manual movements using supports such as racks, mainly trailer-mounted, or by resorting to automations that move the sheets of glass or the panes of insulating glass, individually or in groups, between the work stations and the storage zones, including therein the areas of arrival of raw materials and shipment of the finished products.

Typically, upstream of the cutting it is necessary to select the type and size of the so-called large sheets removing them from a warehouse that sometimes needs to be redistributed for different reasons (although this case is of minor importance for the purpose of the content of the present invention, since it concerns very large sheets called Jumbo, often already collected in homogeneous groups called packages). Downstream of the cutting and upstream of both the grinding, and the tempering and also the manufacturing of the insulating glass, the need for rearranging is consistent, since the cut divides the large sheet or set of large sheets into formats characterized by the same type of sheet in terms of thickness and composition (monolithic/stratified/coated/etc.) but having both different shapes and sizes, and intended for different workings, and also intended for different customers. In summary, the cutting, carried out on the same sheet or set of sheets with the important constraint of optimizing the combinations of shapes and sizes in order to reduce scrap and compact the cutting operations, produces formats which subsequently have to take different paths, undergo different workings and be subject to intermediate stops both for waiting and also rearranging, and finally be destined for different customers.

An important example which makes the logic of the sorting, stopping, rearranging and movements very evident is given precisely by the manufacturing of insulating glass 101 since the sheets of glass 102, 102' used in the composition thereof, already starting from the simplest case of two sheets of glass and a spacer frame 103 or a spacer profile 105, can have different conformations as a function of the use thereof, for example the external glass (external intended with respect to the building) can be normal or reflective or selective (to limit the heat supply during the summer months) or stratified, also called laminated, consisting of two or more sheets of glass intimately connected by one or more membranes made of PVB = Polyvinyl butyral (for security/anti-intrusion functions) or armored (for anti-intrusion/anti-vandalism/bullet-proof functions) or stratified and tempered (for safety functions) or combined (for example reflective and stratified, to obtain a combination of properties); the internal glass (internal intended with respect to the building) can be normal or with low emissivity (to limit the dispersion of heat during the winter months) or stratified and tempered (for safety functions) or combined (for example with low emissivity and stratified, to obtain a combination of properties). Furthermore, the spacer frame 103, 105 which keeps the sheets of glass spaced apart so as to constitute the insulating chamber, can also be of various types: rigid/flexible; made of inorganic material (for example aluminum/stainless steel/etc.)/organic material (for example elastomeric/thermoplastic/etc.); it can come in various colors and in different batch-types. Furthermore, the insulating glass 101 can consist of three sheets of glass 102, 102', 102" and two frames 103, 103' or spacer profiles 105, 105', as well as n sheets of glass 102, 102', 102", 102‴, etc. and n-1 frames 103, 103', 103", etc. or spacer profiles 105, 105', 105", etc.

It follows that, considering the cases described above, there come to be many sorting, stopping, rearranging and moving operations that very often involve movements along very long paths and at a sustained speed in order not to compromise the productivity of the work processes.

This entails two significant problems:
# the wear of the kinematic components of the mechanical transmissions, since they are stressed by the static, dynamic (essentially inertial) loads, by the sliding and rolling frictions and by high speeds of movement;
# the high energy consumption, both deriving from frictions, and also deriving from the accelerations of the masses made up of the means of transport and the sheets of glass (and possible accessories such as in the case of insulating glass).

The search for prior art, filed in the same sector and describing machines and methods for the logistics concerning sheets of glass or panes of insulating glass, leads to the following two representative titles:
EP 1 323 651 B1, proprietor Hegla GmbH, with priority 20.12.2001;
WO 95/25688 B1, proprietor Lisec Peter, with priority 24.03.1994.

Similar solutions have been conceived, industrially protected and implemented for example by Bystronic Lenhardt.

Paper "Enhancing the energy-efficient production of tempered glass by using simulation-based optimisation" from SEIDEL STEPHAN ET AL, on the 22ND IEEE INTERNATIONAL CONFERENCE ON EMERGING TECHNOLOGIES AND FACTORY AUTOMATION (ETFA), IEEE, 12 September 2017 (2017-09-12), and WO 2017/149347 A1 are two additional relevant documents from the prior art.

The first in particular highlights, in figs. 13-15, how downstream of the plant for cutting the large sheets of glass and upstream of the subsequent workings the formats cut are deposited in one or more parking zones according to the sequence operated in the cutting plant and again removed therefrom according to the sequence required by the machines that operate the subsequent workings. The words used repeatedly in these prior art documents are, translated, rails, shuttle, fast sorting, sliders, conveyors, all to configure the movement without determining the kinematic criteria. These terms have been used in the present description for uniformity of language.

No state of the art, however, faces and solves the problems of wear and energy consumption described above, indeed it ignores them completely, perhaps because all these inventions are from a time in which the sensitivity toward these aspects was not yet considered a priority, the most consistent and prevailing energy consumptions being those typical of work machines.

The main task of the present application is therefore to devise devices and methods suitable to implement the logistics of moving, sorting, stopping, rearranging and displacing the sheets of glass A and the panes of insulating glass B, as well as responding to the production requirements, already common in the titles above, also and in particular reducing wear and energy consumption.

From the simple summary presented initially regarding the work processes (cutting, grinding, tempering, manufacturing of the insulating glass) it is evident that the logical interconnection between them and the entry flow of the materials coming from multiple different suppliers and output of the finished products destined for many different customers, and possibly the further processes (for example silk-screen printing, painting, etc.) entail the need to carry out the displacements in such a way that the various workings are not penalized by waiting times, with the consequent need to carry out these displacements with rather high speeds, reached with high accelerations that are also high.

On the other hand, however, it is absurd to move at extreme or in any case high speeds sheets of glass A and panes of insulating glass B, and with them the structures and mechanisms involved, some of which are mechanisms and structures with significant masses, for these elements to then sometimes remain parked if the downstream work station is not yet ready to receive them or have to move the empty means of transport toward the upstream work station at extreme or in any case high speeds if the upstream work station has not yet completed its process and therefore these means would remain stationary, waiting. At extreme or in any case unnecessarily high speeds friction, wear and energy consumption increase and at extreme or in any case high accelerations energy consumption increases. The rather high, yet acceptable, speeds of 3 m/s and 0.3 rad/s and the rather high, yet acceptable and to be considered as examples, accelerations of 2 m/s^2 and 0.8 rad/s^2 are typical, and are values that can also be increased if the kinematics and the design allow it, which however are absurd in the conditions that allow rather lower values without affecting the efficiency and productivity of the work machines. The adverb 'sometimes' makes it clear that an optimization that balances the two requirements that the downstream work stations do not have to wait for the elements to be worked, and that the kinematics for the movement do not have to wait for the availability of elements from the upstream work stations, cannot be resolved with a simple algorithm and that operating at constant transfer speeds, as in the state of the art, makes the triple goal of maintaining the system productivity high, reducing wear and minimizing energy consumption harder to reach.

The innovative part of the present application does not only lie in perfecting or sophisticating a software logic for optimizing routes and selecting speeds and accelerations in order to reduce wear and energy consumption to a minimum, but also in a fuzzy logic; logic that, as detailed in the chapter on ways to carry out the invention, is executed also and in combination with some adaptations in the kinematics and in the sensors.

### DESCRIPTION OF THE INVENTION

The brief description of the drawings and the detailed description of one way to carry out the invention will clarify how the invention object of the present application can be implemented.

### DESCRIPTION OF THE DRAWINGS

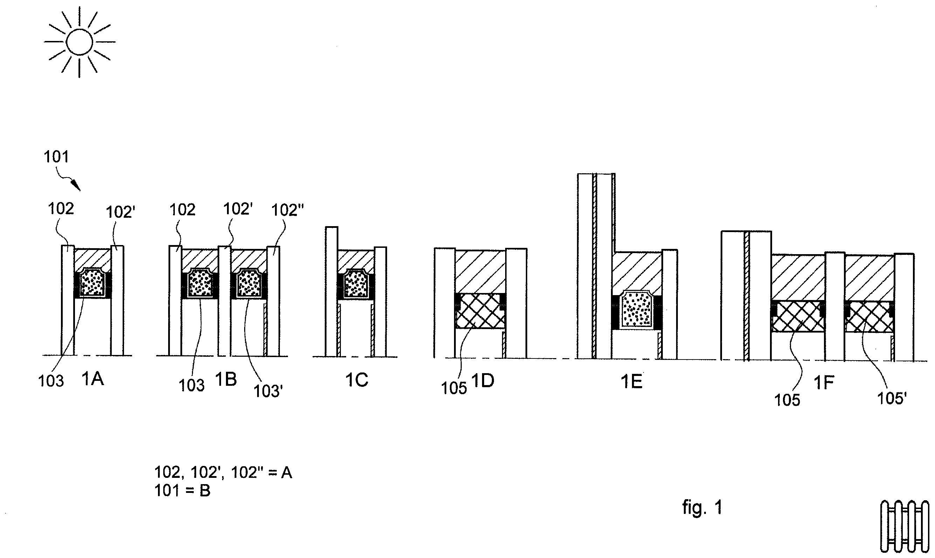

FIGURE 1 schematically represents the peripheral portion of the insulating glass 101 in a non-exhaustive example series of possible combinations of the types of sheets of glass: 1A normal; 1B triple glass with internal glass with low emissivity coating; 1C external glass with selective coating offset with respect to the internal glass with low emissivity coating; 1D external glass tempered, internal glass with low emissivity coating; 1E external glass stratified and offset with respect to the internal glass with low emissivity coating, the protruding part of the external glass is painted on its internal face; 1F external stratified glass offset with respect to the two remaining sheets of glass of which the internal one with low emissivity coating. The internal/external orientation is visually identified with icons representing the sun (external side) and the radiator (internal side).
FIGURE 2 represents the plan view of one of the possible configurations of the assembly of the automatic device for rearranging the sheets of glass and the panes of insulating glass.
FIGURES 3, 4a and 4b represent the elevation views of the configuration shown in fig. 2, in particular to identify, together with fig. 2, the mechanisms for the translations which here we define as L the longitudinal ones and T the transverse ones.
FIGURE 5 represents, overlapping with fig. 2, the dislocations of the electric/electronic panels r, of the control pulpit and operator interface (HMI) s, of the protection devices, indicated generically with t whether they are of the mechanical guards type, or optical barriers, or laser barriers, or electro-sensitive mats, or zonal scanners, etc., since particular attention is dedicated, in addition to the functional, qualitative and productive aspects of the content of this invention, also to the aspects regarding accident prevention.
FIGURE 6 represents a plan view of the device for rearranging the glass sheets, shown in the form of a block diagram since the details are indicated in fig. 2, located between, upstream, machines for the cutting of glass, respectively one for cutting sheets of monolithic glass and one for cutting stratified glass and, downstream, a line for the production of insulating glass.

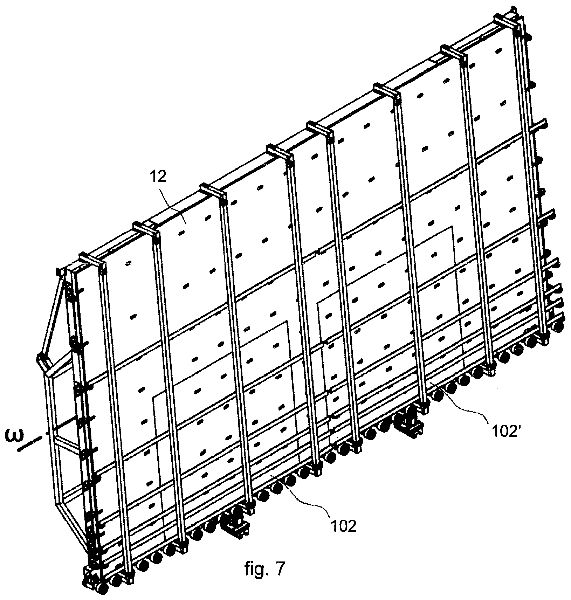

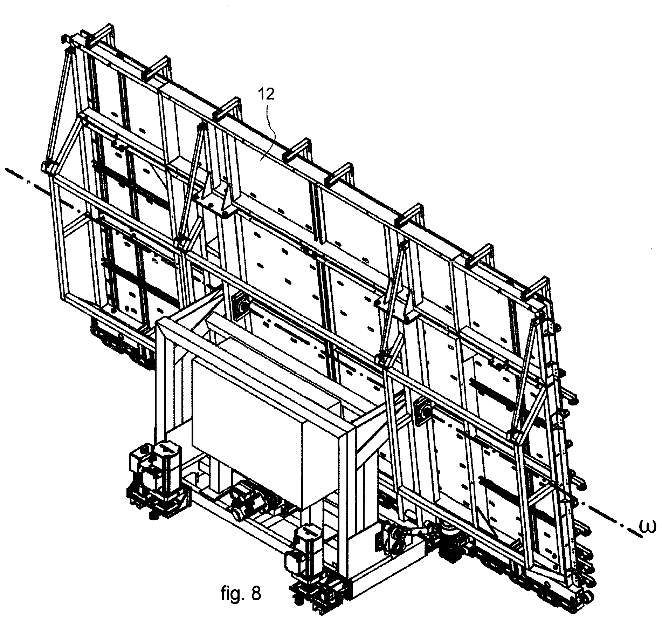

FIGURES 7 and 8 represent the construction details of the shuttle, as implemented in the invention, and show the rotary movement ω in front and rear three-dimensional views.

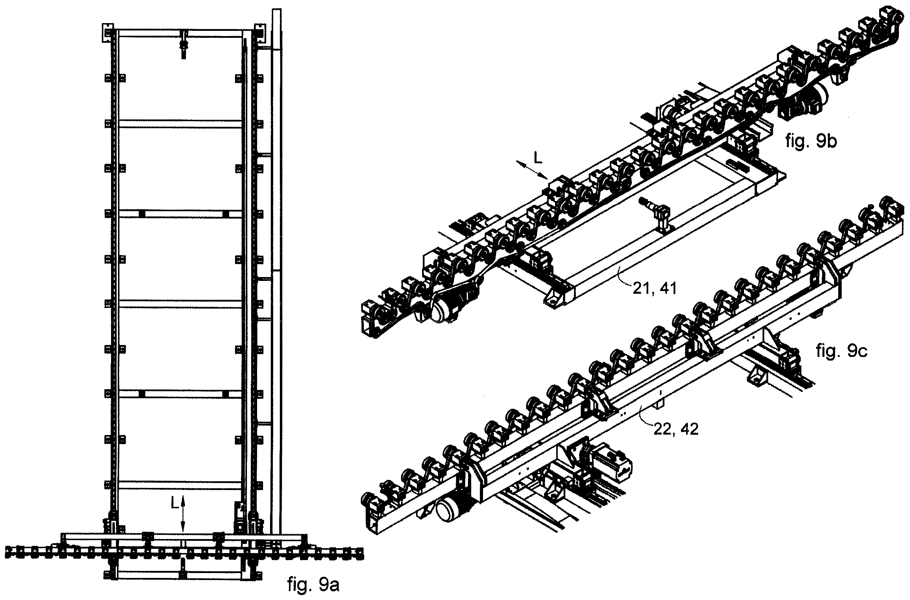

FIGURES. 9a, 9b and 9c represent a plan view and two three-dimensional views of the construction details of a slider having longitudinal movement L, as implemented in the invention.

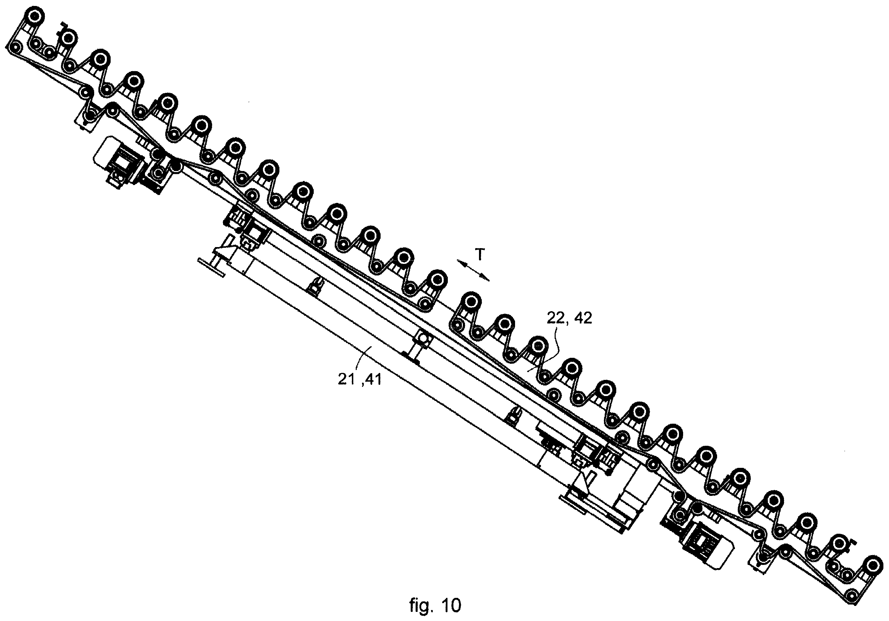

FIGURE 10 represents the front view of the construction details of a conveyor having transverse movement T, as implemented in the invention.

### WAYS TO CARRY OUT THE INVENTION

We come now to the detailed description of one embodiment of the invention as defined in the independent claims 1 and 5.

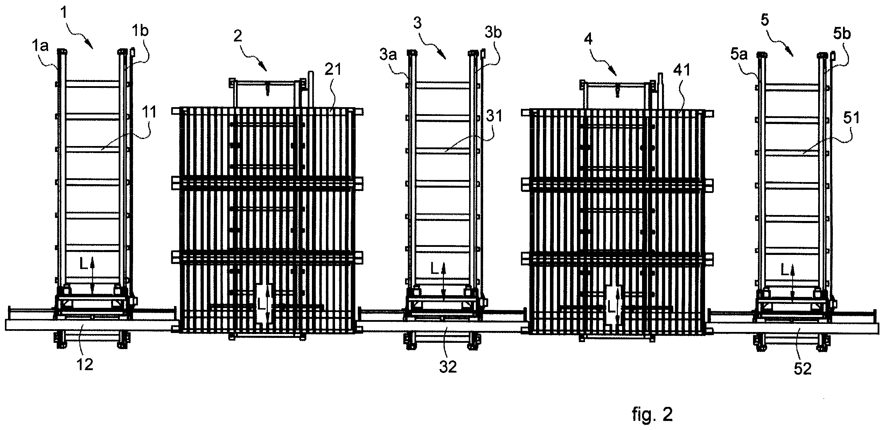

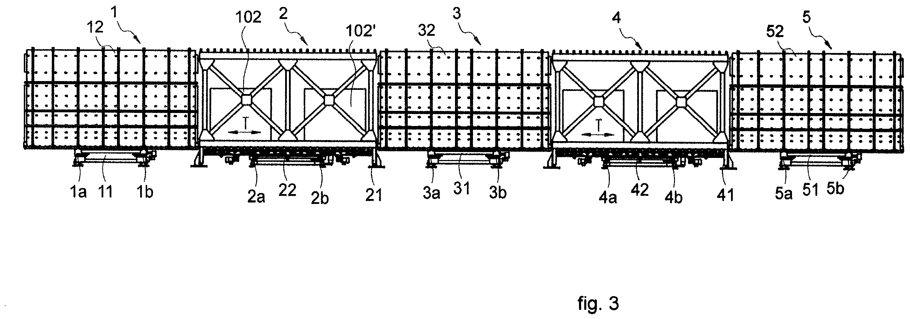

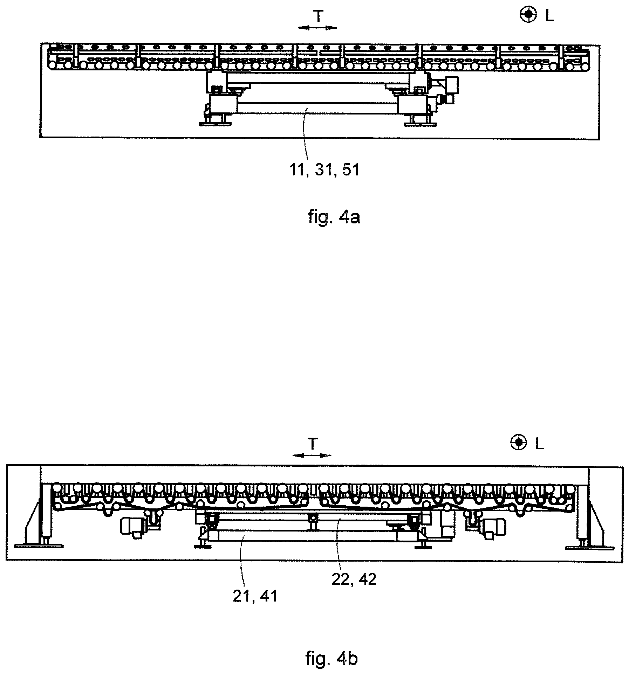

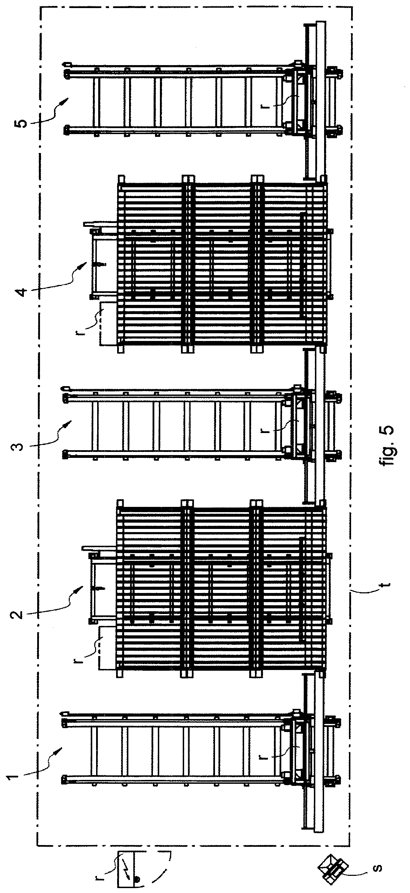

Reference is made to figs. 2-6 for the assemblies and 7-10 for the details.

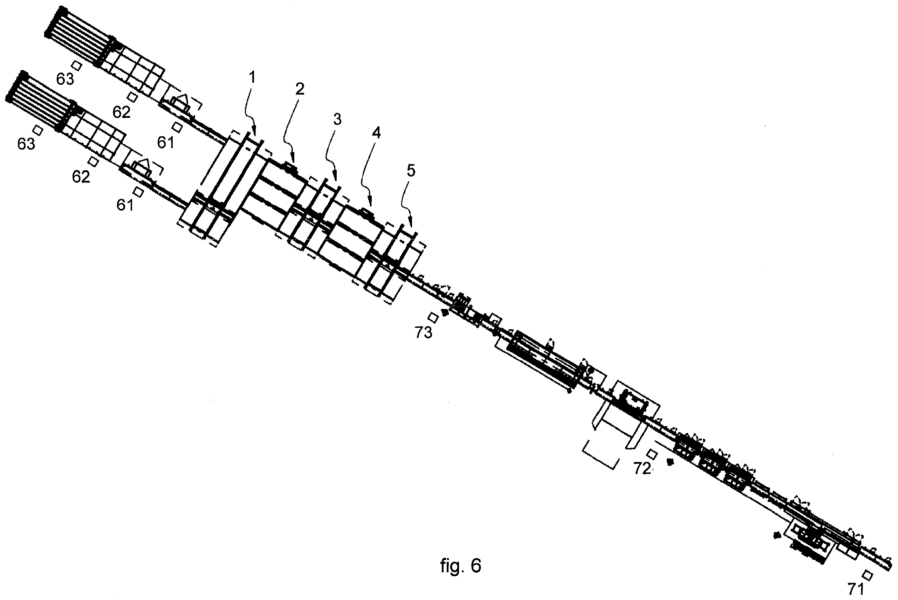

In any case we take it as known, and therefore not in need of a detailed description (as it is part of the state of the art), although partly referred to hereafter, what is represented in figs. 2-6 relating to one of the possible interface configurations between the static storage module units 2, 4 and the transfer shuttle units 12, 32, 52. Except for the reference to the concept that the static storage module units make up the parking modules (with fixed parts 21, 41 and translating parts 22, 42) of the sheets of glass A or of the panes of insulating glass B and the shuttles 12, 32, 52 belong to the transfer modules 1, 3, 5 (with fixed parts 11, 31, 51, substantially bearing the rail units 1a, 1b, 3a, 3b, 5a, 5b, made up of guides and racks, and translating parts, that is, shuttles 12, 32, 52) of the sheets of glass A or of the panes of insulating glass B from the work stations toward compartments of the parking modules or from the compartments of the parking modules toward other compartments of the parking modules or toward work stations. Except for qualifying that the representation of figs. 2-5, or the more complete, though still exemplifying, representation of fig. 6, are the result of a logistics project that has to be reduced on a case by case basis since each manufacturing reality contemplates types and quantities of machinery for the working of glass and insulating glass that are specific to each situation, for that matter sometimes varying over time, therefore the object of the present application also presents characteristics of flexibility already incorporated in the structure of the software. Except for qualifying that the quantity of storage or parking module units 2, 4 and the number of shuttle module units 1, 3, 5 can logically be in a quantity both higher and also lower than those shown in the drawings.

Figs. 2-6 emphasize how the three shuttles 12, 32, 52 have to be in frequent movement since they are used to transfer the elements (whether they are sheets of glass A or panes of insulating glass B if the plant extends downstream of the insulating glass production line) from an upstream work station or in any case from an upstream feed position to a downstream work station or in any case to a downstream destination position, through two parking storage units 2, 4, and furthermore also moving the elements between the compartments of the parking storage units for the rearranging, and also completing travels that can extend up to the entire development of the rails 1a, 1b, 3a, 3b, 5a, 5b, a development which can entail lengths greater than those outlined in the drawings for the following needs:
# significant amount of elements to keep parked, given the multiple types and sizes of the sheets of glass described in the chapter on the state of the art and inherent problems;
# significant amount of elements to keep parked, given the low frequency of the upstream supply and therefore the need to wait for the matching sheets of glass not yet fed since for example coming from external suppliers;
# reaching other work stations located in other zones of the plant, typically but not exhaustively the tempering process which requires environments with characteristics compatible with heat and noise emissions or the silk-screen or painting processes that require environments that are not polluted by dust.

Not only are the shuttles 12, 32, 52, containing the elements involved in the movements, which have to be rapid, according to the longitudinal development L of the rails 1a, 1b, 3a, 3b, 5a, 5b, in the same way the elements (sheets of glass A for example 102 and 102' and panes of insulating glass B) have to be transferred in a transverse direction T with respect to the rails and this is performed by means of kinematics 13, 33, 53 underneath the same shuttles 12, 32, 52 and similarly for the static storage modules 21, 41, by means of kinematics 23, 43 underneath them. The kinematics 22, 42 underneath the static storage modules are also provided with a longitudinal movement L to be positioned in alignment with the shuttles 12, 32, 52, and therefore are of a type similar to that concerning the shuttles. The kinematics present both in the shuttles and also in the storage modules actuating the transverse movements T are typically made up of motorized rollers or motorized conveyor belts and actuate the extraction of the elements from the shuttles and their transport to the storage modules or the extraction of the elements from the storage modules and their transport to the shuttles.

Furthermore, the support surfaces of the elements on the shuttles 12, 32, 52 are also moved according to an axis of rotation ω since in the end of longitudinal travel L step the deceleration in this direction would cause the elements to overturn in a forward direction, which can be contrasted with a suitable inclination of the same surfaces, surfaces that before the transfer of the elements into the compartments of the static storage modules 2, 4 have to assume an almost vertical lying position (the typical inclination is about 1÷2 degrees) or when interfaced with the upstream and downstream work machines have to assume the lying position of these machines.

As anticipated at the beginning of the chapter, one of the possible interface configurations between the static storage module units 2, 4 and the transfer shuttle units 1, 3, 5, and therefore with the upstream and downstream work machines has been described, therefore other movements can be added to those considered, as a function of the complexity of the plant, all entailing sliding and rolling frictions that lead to wear and energy consumption and entailing accelerations that lead to unrecoverable energy consumption in the deceleration steps.

From this complex of movements (at least: longitudinal L and transverse T concerning both the shuttles 12, 32, 52 and also the static storage modules 2, 4, rotational ω concerning the shuttles 12, 32, 52), moreover with number and frequency determined by the number of the shuttles and the storage modules themselves, which in many realities extend to several production departments, and from the types of workings, it can be deduced that the management of the movements cannot deal only with the sequences, synchronisms and interblocks, as in the state of the art, but it is advisable that it continuously adapts and optimizes the parameters governing such movements, with the important objectives of reducing the wear of the mechanisms and of implementing energy savings; in particular, energy savings, as well as nowadays being increasingly necessary for the protection of the environment, can constitute an added value for the economy of a business and, not least, provide access to tax breaks and financing.

As already anticipated, the innovative part of the present application, for the independent claim of the method, is based on fuzzy logic, that is, it does not operate in the classic way of identifying, on the basis of the work sequences, the shortest paths to reduce transfer speeds and therefore dealing with synchronisms and interblocks, or carrying out the rearrangements only in the steps of non-saturation of the workings, which nevertheless remain overlapping and collaborating criteria, but it combines the criteria of predictive analysis with fuzzy logic. Predictive analysis since we analyze past and present events, fuzzy logic (invented in 1965 by the Armenian engineer Dr. Lotfi Zadeh) as a branch of mathematics that does not consist of mathematical formulas but which adapts the computer to the modeling of the real world, shared by people who do not talk about 100 degrees Celsius or 180 kilometers per hour, but about "hot" and "fast", that is, it adapts to the capacity of the human brain to reason in inaccurate and not quantitative terms.

In other words, based on the geometry, resistance and power of the kinematics that make up the device for the movement and necessary rearrangement of the sheets of glass and the panes of insulating glass, it can for example be assumed that transfer speeds of the elements, in the longitudinal L or transverse T direction, of 3 m/s reached with an acceleration of 2 m/s^2 are applicable (or different values based on the configuration of the kinematics) and a rotation speed according to the axis ω of 0.3 rad/s reached with an acceleration of 0.8 rad/s^2 is applicable (or different values based on the configuration of the kinematics). These are the only quantitative starting data. Both the movement and also the rearranging processes are therefore activated using these kinematic parameters supported by the system but certainly not optimized as regards mechanical wear and energy consumption. The movement and rearrangement operations, and the workings, the latter according to the parameters specific to the machines, are carried out as a function of the production program for a certain time interval, monitoring with the minus sign the idle time spent waiting for the elements by the work machines ready to receive the elements or by the compartments of the static storage modules ready to receive the elements for the rearrangement, and with the plus sign the idle time spent waiting by the elements ready to feed the work machines or the compartments of the static storage modules.

The results, regarding the sum of these times, preferably divided by process (exit from work machine/entry into the compartments of the storage modules/rearranging displacement between the compartments of the storage modules/exit from the compartments of the storage modules/entry on work machine/etc.) can be (emulating the Fuzzy concepts of "hot/warm/cold" or "very fast/fast/slow"):
# very positive value = the speeds and accelerations that led to these speeds can be significantly decreased;
# positive value = the speeds and accelerations that led to these speeds can be decreased;
# negative value = the current speed and acceleration parameters are maintained if these were already at the maximum values since it is not possible to go over them, they are increased if they were below the maximum values.

The so-called "defuzzification" step, that is, the process of calculating the output value (so-called "crisp") of a fuzzy system, is not simple since the output has to actuate different kinematics, each having its own behavior: those governing the various longitudinal motions L, those governing the various transverse motions T, those governing the rotational motions according to the axis ω, and has to decide on the sequence of the rearrangements and furthermore the idle waiting times being referred to diversified processes, however for these aspects the traditional non fuzzy programming of the computer becomes applicable, which rationalizes the weights of all variables in logical steps.

Another innovation, object of a further independent claim of the device, is the one summarized in fig. 6, where the selection logic of the accelerations and speeds is not based on predictive analysis of the historical data and on fuzzy logic, but on the predictive analysis of only the current data, this by using arrays of sensors disposed along the stations of the work machines so as to have available advance information regarding:
# the moment the elements are available as the output from the upstream work stations:
   # the moment the elements are required as input to the downstream work stations.

The sensors, 61, 62, 63, etc. if distributed in the upstream work stations, 71, 72, 73, etc. if distributed in the downstream work stations, identify the progress of the workings of the elements, therefore the management computer of the "device for moving and rearranging sheets of glass and panes of insulating glass" can organize and anticipate, process by process, these movements and rearrangements by choosing the minimum accelerations allowed and the minimum speeds allowed of the kinematics, so as to reduce wear and energy consumption without compromising the functionality and productivity of the work machines.

A simplified version of these sensors is to implement the simple synchronism of the RTS/CTS (Request To Send/Clear To Send) type, but clearly this suffers from the additional movement times; this version is implemented only to the signals of the sensors 61, 71, and belongs to the state of the art but is integrated here for the concepts involving wear and energy consumption.

The present invention is susceptible of numerous variant embodiments (with respect to what can be deduced from the drawings, the details of which are evident and eloquent) all falling within the scope of equivalence with the inventive concept, so for example those concerning mechanical solutions for the displacement motions which can be all those common to the state of the art of this case, as well as those concerning the drive means which can be electric, electric-electronic, pneumatic, oil-dynamic and/or combined, etc., as well as those concerning the control means that can be electronic or fluidic and/or combined, etc.

The construction details can be replaced with other technically equivalent ones. The materials and the sizes can be any whatsoever, according to the needs in particular deriving from the sizes (base and height) and/or from the shape of the sheets of glass 102, 102', 102", etc., possibly making up the insulating glass 101.

### INDUSTRIAL APPLICATION

It goes without saying that the industrial application is certain to be successful since industrial logistics, together with the Industry 4.0 configurations, are mandatory added values nowadays, and harbingers of further developments, one of which is already represented by the contents of the present invention.

Nowadays, the types of glass and insulating glass have seen a surprising increase, it is sufficient to consider the cases indicated at the beginning of the description as examples to understand how the intermediate storage of the elements between the workings and the arranging and rearranging of the elements to optimize the work flows are decisive in terms of industrial logistics, and in the case of the present invention they are executed with the valuable results of reducing the wear of the mechanical components of the kinematics, such as guides, rails, ball circulation sliding blocks, bearings, etc. and containing energy consumption.

The insertion of the present invention between the upstream glass cutting line and the downstream insulating glass production line is shown in fig. 6 as an evident confirmation of the sure success in industrial application, given the by now consolidated but always increasing popularity of these plants.

## Claims

1. Automatic device for the sorting, parking, rearranging and distribution of elements made up of sheets of glass (102, 102', 102", etc.) or panes of insulating glass (101), made up of assemblies of rails (1a, 1b, 3a, 3b, 5a, 5b), shuttles (12, 32, 52), storing modules (2, 4) having longitudinal orientations (L) along which the elements are translated or parked, and made up of assemblies of conveyors (13, 23, 33, 43, 53) equipped with movements (T) transverse with respect to the longitudinal orientations (L) for the transfer, actuated through support and motion acting along the bottom edge of the elements, between work stations disposed both upstream and also downstream and shuttles and storing modules, whereby sensors (61, 62, 63) located in the upstream work stations and sensors (71, 72, 73) located in the downstream work stations are distributed all along the corresponding work process and communicate with a management computer of a device logic of the automatic device, so as to enable the management computer of the automatic device to forecast the time required before the element will become available in the case of a upstream work station and to forecast the moment the new element would be required in the case of a downstream work station and **characterized in that** the management computer adjusts parameters relating to selection of accelerations and of speed of the kinematics of the automatic device based on said forecasts in order to minimize the wear of mechanic components of the kinematics and to minimize energy consumption, wherein the management computer is configured to monitor continuously idle waiting times of the work stations and idle waiting times of the shuttles (12, 32, 52) in the direction of the longitudinal orientation (L) according to an axis of rotation (ω) and idle waiting times of the conveyors (22, 42) in the direction of the longitudinal orientation (L) and of the conveyors (13, 23, 33, 43, 53) in the transverse direction (T) with respect to the longitudinal orientation (L) and to compute and sum them periodically, for each single process or globally, with negative assignment when it is the work stations that are waiting and with positive assignment when it is the shuttles or the conveyors that are waiting, and, based on the results of the summation, is configured to adjust the parameters relating to the selection of the accelerations and the speed of the kinematics to minimize the wear of the mechanic components of the kinematics and to minimize the energy consumption, since excessively fast movements are re-parametrized, if these are then followed by an idle waiting time.

2. Device as in the claim 1, **characterized in that** sensors (61) located in the upstream work stations and sensors (71) located in the downstream work stations communicate to the device logic a condition of ready element or of expected element **and in that** the management computer adjusts the parameters relating to the selection of the accelerations and of the speed of the kinematics to minimize the wear of the mechanic components of the kinematics and to minimize the energy consumption.

3. Device as in claim 1, **characterized in that** mechanisms for the longitudinal movements in the longitudinal orientations (L) are made up of guides, ball circulation sliding blocks, racks, pinions, gear boxes, synchronous motors, commanded by drives.

4. Device as in claim 1, **characterized in that** mechanisms for the transverse movements (T), that is, the conveyors (13, 23, 33, 43, 53), are made up of rollers or conveyors belts, transmission chains or belts, gear boxes, synchronous motors, commanded by drives.

5. Automatic method for an automatic device according to claim 1 **characterized in that** idle waiting times of the work stations and idle waiting times of the shuttles (12, 32, 52) in the direction of the longitudinal orientation (L) according to an axis of rotation (ω) and idle waiting times of the conveyors (22, 42) in the direction of the longitudinal orientation (L) and of the conveyors (13, 23, 33, 43, 53) in the transverse direction (T) with respect to the longitudinal orientation (L) are monitored continuously and are computed and summed periodically, for each single process or globally, with negative assignment when it is the work stations that are waiting and with positive assignment when it is the shuttles or the conveyors that are waiting, so that the management computer, based on the results of the summation, adjusts the parameters relating to the selection of the accelerations and the speed of the kinematics to minimize the wear of the mechanic components of the kinematics and to minimize the energy consumption, since excessively fast movements are re-parametrized, if these are then followed by an idle waiting time.

6. Method as in claim 5, **characterized in that** a periodicity of an upgrading is hourly.

7. Method as in claim 5, **characterized in that** a periodicity of an upgrading is different from hourly.

8. Method as in claim 5, **characterized in that** a periodicity of an upgrading is settable through the human-machine interface.

9. Method as in claim 5, **characterized in that** a periodicity of an upgrading is elaborated by a software that through algorithms also takes into consideration the production programs, that is, the quantities, the variability and the types of finished products as resulting from each processing and the destinations thereof.

10. Method as in claim 5 or 9, **characterized in that** the adjusting of the parameters relating to the selection of the accelerations and of the speed of the kinematics is actuated through fuzzy logic.

## Patentansprüche

1. Automatische Vorrichtung zum Sortieren, Parken, Umordnen und Verteilen von Elementen bestehend aus Glasscheiben (102, 102', 102", usw.) oder Isolierglaspaneelen (101), bestehend aus Gruppen von Schienen (la, 1b, 3a, 3b, 5a, 5b), Shuttles (12, 32, 52), Lagerungsmodulen (2, 4) mit Längsorientierungen (L), entlang welcher die Elemente verschoben oder geparkt werden, und bestehend aus Gruppen von Förderern (13, 23, 33, 43, 53), die mit Bewegungen, die querlaufend (T) im Hinblick auf die Längsorientierungen (L) sind, für die Überführung, durch Unterstützung und Bewegung, die entlang des unteren Rands der Elemente wirken, zwischen Bearbeitungsstationen, die sowohl stromaufwärts als auch stromabwärts angeordnet sind, und Shuttles und Lagerungsmodulen umgesetzt wird, versehen sind, wobei Sensoren (61, 62, 63), die in den stromaufwärtigen Bearbeitungsstationen gelegen sind, und Sensoren (71, 72, 73), die in den stromabwärtigen Bearbeitungsstationen gelegen sind, entlang des gesamten entsprechenden Arbeitsablaufs verteilt sind und mit einem Verwaltungscomputer einer Vorrichtungslogik der automatischen Vorrichtung kommunizieren, um dem Verwaltungscomputer der automatischen Vorrichtung zu ermöglichen, die Zeit vorherzusagen, die benötigt wird, bevor das Element im Falle einer stromaufwärtigen Bearbeitungsstation verfügbar ist, und den Zeitpunkt vorherzusagen, wenn das neue Element im Falle einer stromabwärtigen Bearbeitungsstation angefordert wird, und **dadurch gekennzeichnet, dass** der Verwaltungscomputer die Parameter, die die Auswahl der Beschleunigungen und der Geschwindigkeit der Kinematik der automatischen Vorrichtung betreffen, aufgrund der genannten Vorhersagen anpasst, um den Verschleiß der mechanischen Komponenten der Kinematik zu minimieren und den Energieverbrauch zu minimieren, worin der Verwaltungscomputer konfiguriert ist, inaktive Wartezeiten der Bearbeitungsstationen und inaktive Wartezeiten der Shuttles (12, 32, 52) in der Richtung der Längsorientierung (L) nach einer Drehachse (*ω*) und inaktive Wartezeiten der Förderer (22, 42) in der Richtung der Längsorientierung (L) und der Förderer (13, 23, 33, 43, 53) in der Querrichtung (T) im Hinblick auf die Längsorientierung (L) kontinuierlich zu überwachen und sie periodisch zu berechnen und zu addieren, für jeden einzelnen Prozess oder insgesamt, mit einer negativen Zuteilung, wenn es die Bearbeitungsstationen sind, die warten, und mit einer positiven Zuteilung, wenn es die Shuttles oder die Förderer sind, die warten, und, aufgrund der Resultate der Summierung, er konfiguriert ist, die Parameter anzupassen, die die Auswahl der Beschleunigungen und der Geschwindigkeit der Kinematik betreffen, um den Verschleiß der mechanischen Komponenten der Kinematik zu minimieren und den Energieverbrauch zu minimieren, weil übermäßig schnelle Bewegungen wiederparametrisiert werden, wenn diesen dann von einer inaktiven Wartezeit gefolgt werden.

2. Vorrichtung nach Anspruch 1, **dadurch gekennzeichnet, dass** Sensoren (61), die in den stromaufwärtigen Bearbeitungsstationen gelegen sind, und Sensoren (71), die in den stromabwärtigen Bearbeitungsstationen gelegen sind, der Vorrichtungslogik einen Zustand von bereitem Element oder von erwartetem Element kommunizieren und dass der Verwaltungscomputer die Parameter anpasst, die die Auswahl der Beschleunigungen und der Geschwindigkeit der Kinematik betreffen, um den Verschleiß der mechanischen Komponenten der Kinematik zu minimieren und den Energieverbrauch zu minimieren.

3. Vorrichtung nach Anspruch 1, **dadurch gekennzeichnet, dass** die Mechanismen für die Längsbewegungen in den Längsorientierungen (L) aus Führungen, Kugelumlauf-Gleitstücken, Zahnstangen, Ritzeln, Getrieben, von Antrieben gesteuerten Synchronmotoren bestehen.

4. Vorrichtung nach Anspruch 1, **dadurch gekennzeichnet, dass** die Mechanismen für die Querbewegungen (T), d.h. die Förderer (13, 23, 33, 43, 53), aus Rollen oder Förderbändern, Übertragungsketten oder -riemen, Getrieben, von Antrieben gesteuerten Synchronmotoren bestehen.

5. Automatisches Verfahren für eine automatische Vorrichtung nach Anspruch 1, **dadurch gekennzeichnet, dass** inaktive Wartezeiten der Bearbeitungsstationen und inaktive Wartezeiten der Shuttles (12, 32, 52) in der Richtung der Längsorientierung (L) nach einer Drehachse (*ω*) und inaktive Wartezeiten der Förderer (22, 42) in der Richtung der Längsorientierung (L) und der Förderer (13, 23, 33, 43, 53) in der Querrichtung (T) im Hinblick auf die Längsorientierung (L) kontinuierlich überwacht werden und periodisch berechnet und addiert werden, für jeden einzelnen Prozess oder insgesamt, mit einer negativen Zuteilung, wenn es die Bearbeitungsstationen sind, die warten, und mit einer positiven Zuteilung, wenn es die Shuttles oder die Förderer sind, die warten, so dass der Verwaltungscomputer, aufgrund der Resultate der Summierung, die Parameter anpasst, die die Auswahl der Beschleunigungen und der Geschwindigkeit der Kinematik betreffen, um den Verschleiß der mechanischen Komponenten der Kinematik zu minimieren und den Energieverbrauch zu minimieren, weil übermäßig schnelle Bewegungen wiederparametrisiert werden, wenn diesen dann von einer inaktiven Wartezeit gefolgt werden.

6. Verfahren nach Anspruch 5, **dadurch gekennzeichnet, dass** eine Periodizität eines Aktualisierens stündlich ist.

7. Verfahren nach Anspruch 5, **dadurch gekennzeichnet, dass** eine Periodizität eines Aktualisierens anders als stündlich ist.

8. Verfahren nach Anspruch 5, **dadurch gekennzeichnet, dass** eine Periodizität eines Aktualisierens durch die Mensch-Maschine-Schnittstelle einstellbar ist.

9. Verfahren nach Anspruch 5, **dadurch gekennzeichnet, dass** eine Periodizität eines Aktualisierens durch eine Software verarbeitet wird, die durch Algorithmen auch die Produktionsprogramme berücksichtigt, d.h. die Mengen, die Veränderlichkeit und die Arten der Fertigprodukte, so wie diese sich aus jeder Verarbeitung ergeben, und die Bestimmungen davon.

10. Verfahren nach Anspruch 5 oder 9, **dadurch gekennzeichnet, dass** die Anpassung der Parameter, die die Auswahl der Beschleunigungen und der Geschwindigkeit der Kinematik betreffen, durch Fuzzy-Logik umgesetzt wird.

## Revendications

1. Dispositif automatique destiné au tri, au stationnement, au réagencement et à la distribution d'éléments constitués de feuilles de verre (102, 102', 102", etc.) ou de panneaux de verre isolant (101), constitués d'ensembles de rails (1a, 1b, 3a, 3b, 5a, 5b), de navettes (12, 32, 52), de modules de stockage (2, 4) présentant des orientations longitudinales (L) le long desquelles les éléments sont translatés ou stationnés, et constitués d'ensembles de transporteurs (13, 23, 33, 43, 53) dotés de mouvements (T) transversaux par rapport aux orientations longitudinales (L) pour le transfert, actionnées par le soutien et le mouvement agissant le long du bord inférieur des éléments, entre des postes de travail disposés à la fois en amont et également en aval et des navettes et des modules de stockage, selon lequel des capteurs (61, 62, 63) situés dans les postes de travail amont et des capteurs (71, 72, 73) situés dans les postes de travail aval sont répartis tout au long du processus de travail correspondant et communiquent avec un calculateur de gestion d'une logique de dispositif du dispositif automatique, de manière à permettre au calculateur de gestion du dispositif automatique de prévoir le temps nécessaire avant que l'élément ne devienne disponible dans le cas d'un poste de travail en amont et de prévoir le moment où le nouvel élément serait nécessaire dans le cas d'un poste de travail en aval **et caractérisé en ce que** le calculateur de gestion ajuste des paramètres relatifs à la sélection des accélérations et de la vitesse de la cinématique du dispositif automatique sur la base desdites prévisions afin de réduire au minimum l'usure des composants mécaniques de la cinématique et de réduire au minimum la consommation d'énergie, dans lequel le calculateur de gestion est configuré pour surveiller en permanence des temps d'attente improductifs des postes de travail et des temps d'attente improductifs des navettes (12, 32, 52) dans le sens de l'orientation longitudinale (L) selon un axe de rotation (ω) et des temps d'attente improductifs des transporteurs (22, 42) dans le sens de l'orientation longitudinale (L) et des transporteurs (13, 23, 33, 43, 53) dans le sens transversal (T) par rapport à l'orientation longitudinale (L) et pour les calculer et les additionner périodiquement, pour chaque processus ou globalement, avec affectation négative lorsque ce sont les postes de travail qui sont en attente et avec affectation positive lorsque ce sont les navettes ou les transporteurs qui sont en attente, et, sur la base des résultats de la somme, est configuré pour ajuster les paramètres relatifs à la sélection des accélérations et de la vitesse de la cinématique pour réduire au minimum l'usure des composants mécaniques de la cinématique et pour réduire au minimum la consommation d'énergie, puisque des mouvements trop rapides sont reparamétrés, si ceux-ci sont ensuite suivis d'un temps d'attente improductif.

2. Dispositif selon la revendication 1, **caractérisé en ce que** des capteurs (61) situés dans les postes de travail amont et des capteurs (71) situés dans les postes de travail aval communiquent à la logique de dispositif une condition d'élément prêt ou d'élément attendu **et en ce que** le calculateur de gestion ajuste les paramètres relatifs à la sélection des accélérations et de la vitesse de la cinématique pour réduire au minimum l'usure des composants mécaniques de la cinématique et pour réduire au minimum la consommation d'énergie.

3. Dispositif selon la revendication 1, **caractérisé en ce que** des mécanismes pour les mouvements longitudinaux dans les orientations longitudinales (L) sont constitués de guides, de blocs coulissants à circulation à billes, de crémaillères, de pignons, de boîtes de vitesses, de moteurs synchrones, commandés par des entraînements.

4. Dispositif selon la revendication 1, **caractérisé en ce que** des mécanismes pour les mouvements transversaux (T), c'est-à-dire les transporteurs (13, 23, 33, 43, 53), sont constitués de rouleaux ou de bandes transporteuses, de chaînes ou de courroies de transmission, de boîtes de vitesses, de moteurs synchrones, commandés par des entraînements.

5. Procédé automatique pour un dispositif automatique selon la revendication 1, **caractérisé en ce que** des temps d'attente improductifs des postes de travail et des temps d'attente improductifs des navettes (12, 32, 52) dans le sens de l'orientation longitudinale (L) selon un axe de rotation (ω) et des temps d'attente improductifs des transporteurs (22, 42) dans le sens de l'orientation longitudinale (L) et des transporteurs (13, 23, 33, 43, 53) dans le sens transversal (T) par rapport à l'orientation longitudinale (L) sont surveillés en permanence et sont calculés et additionnés périodiquement, pour chaque processus ou globalement, avec affectation négative lorsque ce sont les postes de travail qui sont en attente et avec affectation positive lorsque ce sont les navettes ou les transporteurs qui sont en attente, de sorte que le calculateur de gestion, sur la base des résultats de la somme, ajuste les paramètres relatifs à la sélection des accélérations et de la vitesse de la cinématique pour réduire au minimum l'usure des composants mécaniques de la cinématique et pour réduire au minimum la consommation d'énergie, puisque des mouvements trop rapides sont reparamétrés, s'ils sont ensuite suivis d'un temps d'attente improductif.

6. Procédé selon la revendication 5, **caractérisé en ce qu'**une périodicité d'une mise à niveau est horaire.

7. Procédé selon la revendication 5, **caractérisé en ce qu'**une périodicité d'une mise à niveau est différente d'une périodicité horaire.

8. Procédé selon la revendication 5, **caractérisé en ce qu'**une périodicité d'une mise à niveau peut être réglée par l'intermédiaire de l'interface homme-machine.

9. Procédé selon la revendication 5, **caractérisé en ce qu'**une périodicité d'une mise à niveau est élaborée par un logiciel qui, par l'intermédiaire d'algorithmes, prend également en compte les programmes de production, c'est-à-dire les quantités, la variabilité et les types de produits finis comme résultant de chaque traitement et les destinations de ceux-ci.

10. Procédé selon la revendication 5 ou 9, **caractérisé en ce que** l'ajustement des paramètres relatifs à la sélection des accélérations et de la vitesse de la cinématique est actionné par l'intermédiaire d'une logique floue.
